# EUROPÄISCHE PATENTSCHRIFT

(11) **EP 1 332 313 B1**
(45) Veröffentlichungstag und Bekanntmachung des Hinweises auf die Patenterteilung: **11.07.2007**
(21) Anmeldenummer: 01992857.1
(22) Anmeldetag: 12.10.2001
(51) Int. Cl.: F16L 33/22, F16L 25/00

(54) **ANSCHLUSSSTÜCK FÜR FLEXIBLE KUNSTSTOFFLEITUNGEN MIT SENSORANORDNUNG**
CONNECTOR PIECE FOR FLEXIBLE PLASTIC CONDUITS, COMPRISING A SENSOR ASSEMBLY
RACCORD POUR CONDUITES FLEXIBLES EN PLASTIQUE, COMPORTANT UN SYSTEME DE CAPTEURS

(30) Priorität: 31.10.2000 DE 10054560
(43) Veröffentlichungstag der Anmeldung: 06.08.2003
(73) Patentinhaber: Festo AG & Co., 73734 Esslingen (DE)
(72) Erfinder: FRISCH, Herbert, 73035 Göppingen (DE)
(74) Vertreter: Vetter, Hans
(86) Internationale Anmeldenummer: PCT/EP2001/011804
(87) Internationale Veröffentlichungsnummer: WO 2002/037013

(56) Entgegenhaltungen:
- DE-A- 2 245 906
- DE-A- 3 931 528
- DE-A- 19 808 645
- DE-A- 19 827 883
- US-A- 4 675 780

## Beschreibung

Die Erfindung betrifft ein Anschlussstück für flexible fluidische Kunststoffleitungen, gemäß dem Oberbegriff des Anspruchs 1.

Aus der EP 0 803 653 A1 ist eine Anordnung bekannt, bei der die Übertragung des Arbeitsdrucks und die Sensorsignale von Positionssensoren von Arbeitszylindern über elektropneumatische Kunststoffleitungen erfolgt. Dabei sind die elektropneumatischen Kunststoffleitungen über Anschlussstücke mit Ventilanordnungen verbunden, die an den Arbeitszylindern angebracht sind. Die Positionssensoren sind über Leitungen mit den Ventilanordnungen verbunden. Die Anschlussstücke sind in die Ventile eingesteckt und mittels Halteschrauben fixiert. Wegen der elektrischen Steckverbindungen der Anschlussstücke zu den Ventilanordnungen hin ist ein Einschrauben der Anschlusstücke in übliche pneumatische Einschrauböffnungen nicht möglich. Darüber hinaus müssen die Positionssensoren zusätzlich und indirekt mit den Anschlussstücken verbunden werden, was einen relativ großen Montageaufwand bedeutet.

Bei einem aus der DE 22 45 906 A bekannten Anschlussstück der eingangs genannten Gattung wird seitlich ein Kabel mittels eines Klemmschraubstutzens angeschraubt, wobei eine Leitung dieses Kabels mit einer Leitung des Kupplungsschlauchs verlötet oder verschraubt wird, was eine umständliche Art der Verbindung darstellt. Weiterhin enthält diese Druckschrift keinerlei Anregungen zur elektrischen Verbindung eines Positionssensors zur Kolbenpositionserfassung mit der einen Leiter enthaltenden Kunststoffleitung.

Eine Aufgabe der vorliegenden Erfindung besteht darin, ein derartiges Anschlussstück zu schaffen, durch das die pneumatische Verbindung mit den Arbeitszylindern und die elektrische Verbindung mit entsprechenden Positionssensoren bei geringem Montageaufwand vereinfacht werden kann.

Diese Aufgabe wird erfindungsgemäß durch ein Anschlussstück mit den Merkmalen des Anspruchs 1 gelöst.

In vorteilhafter Weise kann zum einen das Anschlussstück in üblicher Weise in eine pneumatische Schrauböffnung des Arbeitszylinders eingeschraubt werden, wobei dann der oder die Positionssensoren oder andere Sensoren lediglich noch mechanisch fixiert werden müssen. Elektrische Verbindungen müssen nicht mehr gesondert hergestellt werden. Auch andere Sensoren, wie beispielsweise Drucksensoren, brauchen dann lediglich in entsprechende Aufnahmen mechanisch eingesetzt werden. Die Gefahr von falschen elektrischen Anschlüssen und Anschlussverwechslungen bei den Sensoren ist dabei ausgeschaltet. Sollen Sensoren beispielsweise wegen eines Defekts ausgewechselt werden, so muss lediglich das Anschlussstück ausgewechselt werden. Auch hierbei besteht trotz einfachster Montage keine Gefahr von fehlerhaften elektrischen Anschlüssen.

Durch die in den Unteransprüchen aufgeführten Maßnahmen sind vorteilhafte Weiterbildungen und Verbesserungen des im Anspruch 1 angegebenen Anschlussstücks möglich.

In vorteilhafter Weise ist am Boden der nicht drehsymmetrischen, an den Querschnitt der Kunststoffleitung angepassten Steckaufnahme wenigstens eine elektrische Kontaktspitze als Kopplungsmittel derart angeordnet, dass sie beim Einstecken der Kunststoffleitung in die Steckaufnahme mit dem wenigstens einen elektrischen Leitungsstrang fluchtet und in diesen eindringt. Dadurch können durch einfaches Einstecken der fluidischen Kunststoffleitung in die Steckaufnahme automatisch die elektrischen Anschlüsse selbst dann hergestellt werden, wenn mehrere Leitungsstränge in der Wandung der Kunststoffleitung vorhanden sind. Ein zusätzliches oder nachträgliches Herstellen der elektrischen Verbindungen entfällt vollständig. Da beim Einstecken der Kunststoffleitung in die Steckaufnahme die Kontaktspitzen direkt in die Leitungsstränge eindringen, ist eine sichere elektrische Verbindung gewährleistet, zumal Kontaktspitzen in der Längsrichtung in die Leitungsstränge eindringen und somit eine gegenüber einem Quereinstecken längere Kontaktstrecke bilden.

Alternativ oder zusätzlich kann die Wandung der Kunststoffleitung auch wenigstens einen Lichtleiter aufweisen, wobei dann anstelle der Kontaktspitzen Lichtübertrager oder Lichtwandler am Boden der Steckaufnahme treten. Die beschriebenen Vorteile treten auch bei dieser Ausgestaltung auf.

Die Steckaufnahme besitzt zweckmäßigerweise ein parallel zur Kontaktspitze angeordnetes, beim Einstecken der Kunststoffleitung in deren Fluidkanal eindringendes Rohrstück oder besteht im wesentlichen aus einem solchen. Beim Aufstecken der Kunststoffleitung auf das Rohrstück wird somit zum einen eine dichtende fluidische Verbindung gebildet, und zum anderen dient dieses Rohrstück zur Zentrierung und Ausrichtung der Kunststoffleitung und ermöglicht dadurch eine sichere Positionierung relativ zu der oder den Kontaktspitzen.

Zur mechanischen Fixierung, jedoch auch zur zusätzlichen Abdichtung, dient in vorteilhafter Weise eine Klemmfixierung, die insbesondere als Klemmverschraubung ausgebildet ist. Die Klemmverschraubung besteht dabei in vorteilhafter Weise aus einem die Steckaufnahme umgreifenden Schraubgewinde sowie aus einer entsprechenden Überwurfmutter, wobei ein durch die Überwurfmutter axial entlang einer Schrägfläche bewegbares Keilstück zur Klemmfixierung der Kunststoffleitung vorgesehen ist, insbesondere zur Klemmfixierung zwischen dem Rohrstück und dem Keilstück. Beim Einschrauben der Überwurfmutter erfolgt dadurch nicht nur die gewünschte Klemmfixierung, sondern zusätzlich wird die Kunststoffleitung in die Steckaufnahme hineingedrückt, wodurch sich der elektrische Kontakt zwischen den Kontaktspitzen und den Leitungssträngen durch Verdichtung des Schlauchkabelmaterials verbessert (Kontaktdruck über das Schlauchkabelmaterial).

In einer vorteilhaften Ausführung ist das flexible Keilstück als Klemmring ausgebildet und besitzt eine der Außenkontur der Kunststoffleitung entsprechende Innenkontur, wobei sich der Außendurchmesser keilartig zum Boden der Steckaufnahme hin verjüngt. Hierdurch wird durch die Klemmverschraubung in Verbindung mit geeigneten Dichtungsmitteln gleichzeitig ein wassergeschützter Anschluss gebildet.

Bei der als Positionssensor zur Kolbenpositionserfassung ausgebildeten Sensoranordnung wird eine besonders einfache und störungssichere Montage und Anordnung dadurch erreicht, dass die Sensoranordnung und das elektrische und/oder optische Anschlusskabel irreversibel miteinander verbunden sind, insbesondere aneinander angeformt sind. Ebenfalls ist das wenigstens eine Anschlusskabel bevorzugt irreversibel an den Grundkörper des Anschlussstücks angeformt, da hierdurch eine wasser- und umweltgeschützte Anordnung erzielt wird.

Ausführungsbeispiele der Erfindung sind in der Zeichnung dargestellt und in der nachfolgenden Beschreibung näher erläutert. Es zeigen:
- Fig. 1: ein erstes Ausführungsbeispiel eines Anschlussstücks mit angeformtem Anschlusskabel und Sensor, bei dem eine fluidische Kunststoffleitung mit drei elektrischen Leitungssträngen in der Wandung aufgesteckt wird, im Längsschnitt,
- Fig. 2: eine Querschnittsdarstellung der fluidischen Kunststoffleitung,
- Fig. 3: das Anschlussstück gemäß dem ersten Ausführungsbeispiel bei vollständig eingesteckter und durch eine Klemmverschraubung fixierter Kunststoffleitung und
- Fig. 4: ein zweites Ausführungsbeispiel eines Anschlussstücks für eine optische Signalübertragung im Längsschnitt.

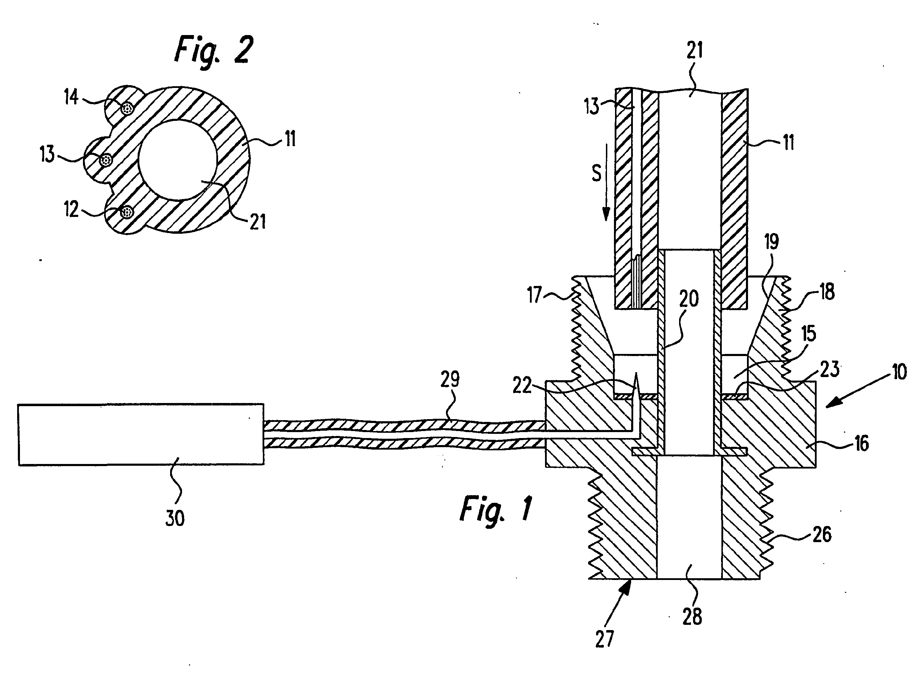

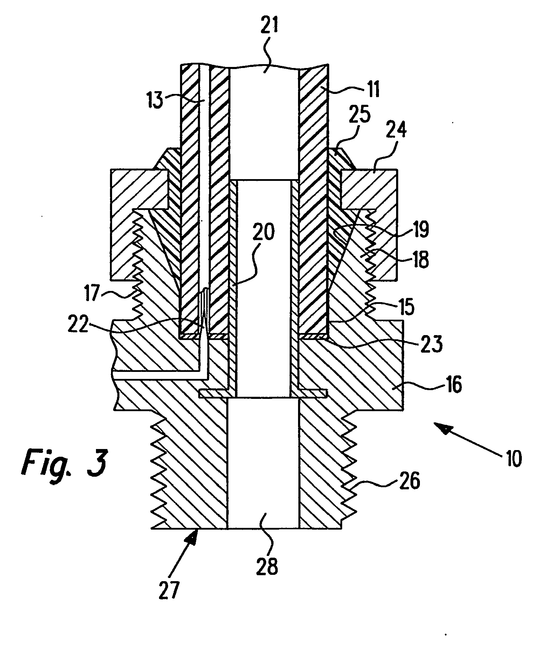

Das in den Fig. 1 und 3 als erstes Ausführungsbeispiel dargestellte Anschlussstück 10 dient im wesentlichen zur Verbindung mit einer flexiblen fluidischen Kunststoffleitung 11, in deren Wandung drei elektrische Leitungsstränge 12 - 14 verlaufen, die beispielsweise als Litzen ausgebildet sind. Die Zahl der Leitungsstränge 12 - 14 ist selbstverständlich beliebig zwischen einem und einer Vielzahl von Leitungssträngen.

Die Kunststoffleitung 11 weist einen nicht drehsymmetrischen Querschnitt auf, so dass ein Einstecken in eine Steckaufnahme 15 mit entsprechendem Querschnitt des Grundkörpers 16 des Anschlussstücks 10 nur in einer bestimmten Ausrichtung möglich ist. Die Steckaufnahme 15 ist dabei von einem rohrartigen, außen ein Schraubgewinde 17 aufweisenden Wandbereich 18 des Grundkörpers 16 umgeben. Ein sich an den Bereich der Steckaufnahme 15 anschließender Teil des Wandbereichs 18 ist zum freien axialen Ende hin verjüngt, so dass an seiner Innenseite eine kreiskegelartige Schrägfläche 19 gebildet wird. Die Steckaufnahme 15 ist radial nach innen durch ein Rohrstück 20 begrenzt, das am bzw. im Grundkörper 16 dichtend verankert oder daran angeformt ist und das sich in axialer Richtung über das freie Ende des Wandbereichs 18 hinaus erstreckt. Der Außendurchmesser des Rohrstücks 20 ist dabei geringfügig größer als der Innendurchmesser eines Fluidikkanals 21 im Innern der Kunststoffleitung 11.

Vom Boden der Steckaufnahme 15 aus erstrecken sich elektrische Kontaktspitzen 22 parallel zum Rohrstück 20 in die Steckaufnahme 15 hinein, wobei die Zahl und Anordnung der Kontaktspitzen 22 der Zahl und Anordnung der Leitungsstränge 12 - 14 in der Kunststoffleitung 11 entspricht, so dass beim Einstecken der Kunststoffleitung 11 in die Steckaufnahme 15 die Kontaktspitzen 22 in die Leitungsstränge 12 - 14 eindringen und eine elektrisch leitende Verbindung herstellen, wie dies in Fig. 3 dargestellt ist. Infolge der Schnittdarstellung ist lediglich die mit dem mittleren Leitungsstrang 13 in Kontakt stehende Kontaktspitze 22 erkennbar. Dabei ist noch eine Dichtscheibe 23 zwischen dem Boden der Steckaufnahme 15 und der Stirnseite der Kunststoffleitung 11 angeordnet.

Zur Fixierung der eingesteckten Kunststoffleitung 11 in der Steckaufnahme 15 dient eine mit dem Schraubgewinde 17 verschraubbare Überwurfmutter 24, durch die ein flexibler elastischer Klemmring 25 nach Art einer Spannzange axial verschiebbar ist. Die Innenkontur dieses Klemmrings 25 entspricht dabei der Außenkontur der Kunststoffleitung 11, während die Außenkontur dieses Klemmrings 25 zumindest im Bereich der kreiskegelartigen Schrägfläche 19 des Wandbereichs 18 komplementär kreiskegelartig ausgebildet ist, so dass beim Einschrauben der Überwurfmutter 24 der Klemmring 25 durch Keilwirkung gegen die Kunststoffleitung 11 gepresst wird und diese zwischen sich und dem Rohrstück 20 festklemmt. Dabei wirkt beim Einschrauben der Überwurfmutter 24 mittels des Klemmrings 25 eine Kraft auf die Kunststoffleitung 11 in der Steckrichtung S, durch die die Kunststoffleitung 11 gegen den Boden der Steckaufnahme 15 und damit gegen die Dichtscheibe 23 gedrückt wird. Gleichzeitig dringen die Kontaktspitzen 22 noch tiefer in die Kunststoffleitung 11 bzw. die Leitungsstränge 12 - 14 ein, sofern sie nicht bereits vollständig beim Einstecken eingedrungen sind. Zusätzlich wird durch das Verpressen des elastischen Materials des Schlauchkabels der Kontaktdruck verstärkt.

In Abwandlung des dargestellten Ausführungsbeispiels können anstelle der beschriebenen Klemmverschraubung auch andere bekannte Klemm- oder Rastverbindungen oder auch Innenverschraubungen eingesetzt werden. Im einfachsten Falle kann beispielsweise lediglich das Rohrstück 20 an seiner Außenseite und/oder der Wandbereich 18 an seiner Innenseite mit ringartigen Haltevorsprüngen zur Fixierung der eingesteckten Kunststoffleitung 11 versehen sein. Solche Haltevorsprünge können auch zusätzlich beim beschriebenen Ausführungsbeispiel eingesetzt werden. Auch die Kontaktspitzen 22 können anders angeordnet sein oder durch andere Kontaktmittel ersetzt werden.

Der axial dem Wandbereich 18 entgegengesetzte Endbereich des Grundkörpers 16 ist als Verschraubung zum dichtenden Einschrauben in ein fluidisches Gerät, wie ein Ventil, einen Arbeitszylinder oder dergleichen, ausgebildet. Hierzu ist dieser rohrartige Verschraubungsbereich 27 mit einem Außengewinde 26 versehen, wobei ein von der Stirnseite bis zum Rohrstück 20 verlaufender Innenkanal 28 die fluidische Verbindung herstellt.

Gemäß Fig. 1 ist umfangsseitig am Grundkörper 16 ein elektrisches Kabel 29 angesetzt oder angeformt, das die elektrische Verbindung zwischen einer Sensoranordnung 30 und den Kontaktspitzen 22 herstellt. Falls die Sensoranordnung 30 zur Signalübertragung nur zwei Leitungen benötigt, so kann das Kabel 29 statt dreiadrig auch zweiadrig ausgebildet sein, so dass eine der Kontaktspitzen 22 nicht angeschlossen ist oder entfällt. Das elektrische Kabel 29 kann dabei sowohl an der Sensoranordnung 30 als auch am Grundkörper 16 dichtend angeformt sein. Eine solche Sensoranordnung dient beispielsweise zur Positionserfassung, zur Druckerfassung oder zur Temperaturerfassung. Dabei enthält die Sensoranordnung 30 für die jeweilige Messwerterfassung bekannte Sensoren, beispielsweise für die Positionserfassung Hall-Elemente oder andere auf magnetische und/oder elektrische Felder ansprechende Sensoren.

Eine geeignete Anwendung besteht beispielsweise darin, dass zwei solcher Anschlussstücke 10 in zwei Druckanschlüsse eines Arbeitszylinders eingeschraubt werden, um die beiden entgegengesetzten Arbeitsbewegungen durchzuführen. Dabei dienen die angeformten, als Positionssensoren ausgebildeten Sensoranordnungen 30 zur Positionsenderfassung des Kolbens des Arbeitszylinders und werden entsprechend am Gehäuse des Arbeitszylinders angebracht bzw. justiert. Dabei können die Anschlussstücke auch mehrere Sensoren aufweisen, beispielsweise mehrere Positionssensoren und/oder Drucksensoren.

Anstelle eines angeformten elektrischen Kabels 29 kann die Anschlussstelle auch als elektrische Steck- oder Schraubverbindung ausgebildet sein. Weiterhin können in einer alternativen Ausgestaltung auch mehrere elektrische Kabel 29 am Grundkörper 16 angesetzt, angeformt oder über mehrere Steck- oder Schraubverbindungen verbunden sein, um beispielsweise mehrere Sensoranordnungen oder sonstige Geräte mit den Leitungssträngen 12 - 14 in der Kunststoffleitung 11 zu verbinden.

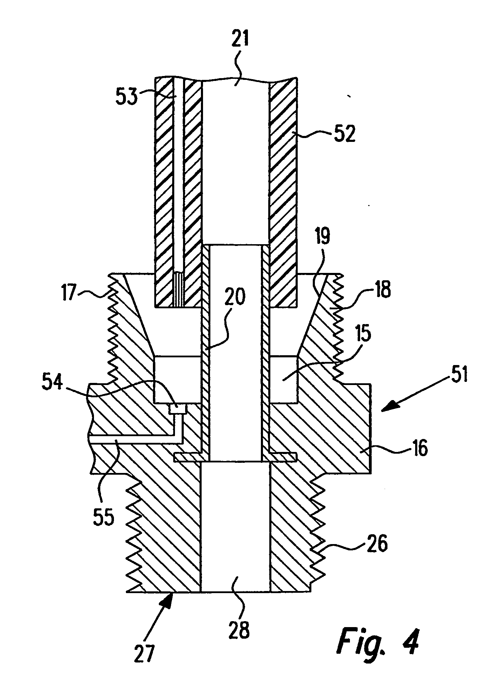

Das in Fig. 4 als zweites Ausführungsbeispiel dargestellte Anschlussstück 51 entspricht weitgehend dem als erstes Ausführungsbeispiel beschriebenen Anschlussstück 10, wobei gleiche oder gleichwirkende Bauteile und Bereiche mit denselben Bezugszeichen versehen und nicht nochmals beschrieben sind. Im Unterschied zum ersten Ausführungsbeispiel tritt hier eine Kunststoffleitung 52 mit entsprechendem Querschnitt, in deren Wandung anstelle von elektrischen Leitungssträngen 12 - 14 nunmehr Lichtleiter 53 angeordnet sind. Am Boden der Steckaufnahme 15 sind die Kontaktspitzen 22 durch Lichtübertrager 54 ersetzt, die bei eingesteckter Kunststoffleitung 52 in optischen Kontakt mit den Stirnseiten der Lichtleiter 53 gelangen. Die mit den Kontaktspitzen 22 verbundenen, intern im Grundkörper 16 verlaufenden elektrischen Leitungen sind hier durch entsprechend verlaufende interne Lichtleiter 55 ersetzt. Die Wirkungsweise des in Fig. 4 dargestellten zweiten Ausführungsbeispiels entspricht grundsätzlich dem ersten Ausführungsbeispiel, wobei lediglich die elektrische Signalübertragung durch eine optische Signalübertragung ersetzt ist.

In Abwandlung des zweiten Ausführungsbeispiels können in einer einfacheren Ausführung die Lichtübertrager 54 auch entfallen, so dass die Lichtleiter 53 in der Kunststoffleitung 52 direkt in optischen Kontakt mit den internen Lichtleitern 55 gelangen. Alternativ hierzu können die Lichtübertrager 54 auch durch Lichtwandler ersetzt werden, so dass dort optische Signale in elektrische Signale umgewandelt werden und die internen Lichtleiter 55 wiederum durch elektrische Leitungen ersetzt werden können.

Prinzipiell sind auch gemischte Ausführungen zwischen dem ersten und dem zweiten Ausführungsbeispiel denkbar, das heißt, eine Kunststoffleitung kann zum Teil elektrische Leitungsstränge und zum Teil Lichtleiter enthalten, wobei dann in der Steckaufnahme 15 entsprechende Kontaktspitzen und Lichtübertrager bzw. Lichtwandler angeordnet sind. Beispielsweise können ein Lichtleiter für die Signalübertragung und zwei elektrische Leitungsstränge für elektrische Verstärker bzw. zur Stromversorgung vorgesehen sein.

## Patentansprüche

1. Anschlussstück für flexible fluidische Kunststoffleitungen (11, 52), deren Wandung wenigstens einen elektrischen Leitungsstrang (12 - 14) und/oder Lichtleiter (53) aufweist, mit einer Leitungs-Steckaufnahme (15), die mit einer fluidischen Leitung (28) im Anschlussstück (10; 51) und über diese mit einer weiteren fluidischen Anschlussstelle (27) verbunden ist und die zur elektrischen und/oder optischen Verbindung mit solchen Kunststoffleitungen dienende Kopplungsmittel (22; 54) besitzt, und mit wenigstens einem seitlich am Anschlussstück (10; 51) angesetzten Anschlusskabel (29), **dadurch gekennzeichnet, dass** die fluidische Anschlussstelle (27) als fluidische Anschlussverschraubung zum Einschrauben in einen fluidischen Arbeitszylinder ausgebildet ist und dass durch das Anschlusskabel (29) eine am vom Anschlussstück entfernten Ende des Kabels (29) angebrachte Sensoranordnung (30) elektrisch und/oder optisch mit den Kopplungsmitteln (22; 54) verbunden ist, wobei die Sensoranordnung (30) als Kolbenpositionssensor und/oder Drucksensor für den Arbeitszylinder ausgebildet ist.

2. Anschlussstück nach Anspruch 1, **dadurch gekennzeichnet, dass** am Boden der nicht drehsymmetrischen, an den Querschnitt einer einzusteckenden Kunststoffleitung (11) angepassten Steckaufnahme (15) wenigstens eine elektrische Kontaktspitze als Kopplungsmittel (22) derart angeordnet ist, dass sie beim Einstecken einer solchen Kunststoffleitung (11) in die Steckaufnahme (15) mit deren wenigstens einem elektrischen Leitungsstrang (12 - 14) fluchtet und in diesen eindringt.

3. Anschlussstück nach Anspruch 1 oder 2, **dadurch gekennzeichnet, dass** am Boden der nicht drehsymmetrischen, an den Querschnitt einer einzusteckenden Kunststoffleitung (52) angepassten Steckaufnahme (15) als Kopplungsmittel wenigstens ein Lichtübertrager (54) oder Lichtwandler derart angeordnet ist, dass er beim Einstecken einer solchen Kunststoffleitung (52) in die Steckaufnahme (15) mit deren Lichtleiter (53) fluchtet und eine Lichtverbindung herstellt.

4. Anschlussstück nach einem der vorhergehenden Ansprüche, **dadurch gekennzeichnet, dass** die Steckaufnahme (15) ein in der Steckrichtung (S) ausgerichtetes, beim Einstecken einer Kunststoffleitung (11; 52) in deren Fluidikkanal (21) eindringendes Rohrstück (20) besitzt oder im Wesentlichen aus einem solchen besteht.

5. Anschlussstück nach einem der vorhergehenden Ansprüche, **dadurch gekennzeichnet, dass** eine eine in die Steckaufnahme (15) eingesteckte Kunststoffleitung (11; 52) haltende Klemmfixierung vorgesehen ist, die insbesondere als Klemmverschraubung ausgebildet ist.

6. Anschlussstück nach Anspruch 5, **dadurch gekennzeichnet, dass** ein die Steckaufnahme (15) ringförmig umgreifender Wandbereich (18) mit einem Gewinde (17) und ein entsprechendes Verschraubungselement (24), insbesondere eine Überwurfmutter vorgesehen sind, wobei ein durch das Verschraubungselement (24) axial entlang einer Schräg- oder Kreiskegelfläche bewegbares Keilstück (25) zur Klemmfixierung einer Kunststoffleitung (11; 52) vorgesehen ist, insbesondere zur Klemmfixierung zwischen dem Rohrstück (20) und dem Keilstück (25).

7. Anschlussstück nach Anspruch 6, **dadurch gekennzeichnet, dass** das flexible Keilstück (25) als Klemmring ausgebildet ist und eine der Außenkontur einer einzusteckenden Kunststoffleitung (11; 52) entsprechende Innenkontur besitzt, wobei sich der Außendurchmesser keil- oder kreiskegelartig zum Boden der Steckaufnahme (15) hin verjüngt.

8. Anschlussstück nach einem der vorhergehenden Ansprüche, **dadurch gekennzeichnet, dass** die Sensoranordnung (30) und das elektrische und/oder optische Anschlusskabel (29) irreversibel miteinander verbunden sind, insbesondere aneinander angeformt sind.

9. Anschlussstück nach einem der vorhergehenden Ansprüche, **dadurch gekennzeichnet, dass** das wenigstens eine Anschlusskabel (29) irreversibel an den Grundkörper (10; 51) angeformt ist.

10. Anschlussstück nach einem der vorhergehenden Ansprüche, **dadurch gekennzeichnet, dass** die Sensoranordnung (30) Mittel zur variablen Fixierung an einem Arbeitszylinder besitzt, der weiterhin wenigstens eine Anschlussschrauböffnung zum Einschrauben des Anschlussstückes (10; 51) besitzt.

## Claims

1. Connection piece for flexible fluidic plastic lines (11, 52) with a wall having one or more interconnector strands (12-14) and/or optical fibres (53), with a line plug receptacle (15) connected to a fluidic line (28) in the connection piece (10; 51) and via this to a further fluidic connection point (27), and which has coupling means (22; 54) for the purpose of electrical and/or optical connection with such plastic lines, and with one or more connection cables (29) attached to the side of the connection piece (10; 51), **characterised in that** the fluidic connection point (27) is in the form of a fluidic screwed connector for screwing into a fluidic operating cylinder and that, by means of the connection cable (29), a sensor array (30) attached to the other end of the cable (29) from the connection piece is connected electrically and/or optically to the coupling means (22; 54), wherein the sensor array (30) is designed as piston position sensor and/or pressure sensor for the operating cylinder.

2. Connection piece according to claim 1 **characterised in that**, on the base of the non-rotationally-symmetric plug receptacle (15) matched to the cross-section of a plastic line (11) to be plugged in, one or more electrical contact tips are arranged as coupling means (22) in such a way that on insertion of such a plastic line (11) into the plug receptacle (15) they are aligned with and penetrate its electrical interconnector strand or strands (12-14).

3. Connection piece according to claim 1 or 2 **characterised in that**, on the base of the non-rotationally-symmetric plug receptacle (15) matched to the cross-section of a plastic line (52) to be plugged in, one or more light transmitters (54) or light converters are arranged as coupling means in such a way that on insertion of such a plastic line (52) into the plug receptacle (15) they are aligned with its optical fibre (53) and create an optical connection.

4. Connection piece according to any of the preceding claims, **characterised in that** the plug receptacle (15) has or is substantially comprised of a tube length (20) aligned in the direction of insertion (S) and which, when a plastic line (11; 52) is plugged in, penetrates its fluid passage (21).

5. Connection piece according to any of the preceding claims, **characterised in that** there is provided a clamp fixing holding a plastic line (11; 52) inserted in the plug receptacle (15), in particular in the form of a clamp connector.

6. Connection piece according to claim 5, **characterised in that** an annular wall section (18) encompassing the plug receptacle (15) is provided with a thread (17) and a corresponding connector element (24), in particular a sleeve nut, wherein a wedge-shaped piece (25) capable of movement by the connector element (24) axially along an inclined or circular cone surface is provided for clamp fixing of a plastic line (11; 52), in particular for clamp fixing between the tube length (20) and the wedge-shaped piece (25).

7. Connection piece according to claim 6, **characterised in that** the flexible wedge-shaped piece (25) is in the form of a clamping ring and has an internal contour matching the external contour of a plastic line (11, 52) to be inserted, wherein the outside diameter narrows towards the base of the plug receptacle (15) in the manner of a wedge or circular cone.

8. Connection piece according to any of the preceding claims, **characterised in that** the sensor array (30) and the electrical and/or optical connection cable (29) are irreversibly joined together, in particular integrally moulded to one another.

9. Connection piece according to any of the preceding claims, **characterised in that** the connection cable or cables (29) is/are moulded integrally to the basic body (10; 51).

10. Connection piece according to any of the preceding claims, **characterised in that** the sensor array (30) has means for variable fixing to an operating cylinder, which also has one or more connection screw holes for screwing in the connection piece (10; 51).

## Revendications

1. Raccord pour conduites fluidiques flexibles en plastique (11, 52), dont la paroi comprend au moins une branche de ligne électrique (12 - 14) et/ou un guide d'ondes optiques (53), avec un logement d'emboîtement de conduite (15), qui est relié à une conduite fluidique (28) dans un raccord (10 ; 51) et qui est relié via celle-ci à un autre point de raccordement fluidique (27) et qui possède des moyens de couplage (22 ; 54) servant de liaison électrique et/ou optique avec de telles conduites en plastique, et avec au moins un câble de raccordement (29) rattaché latéralement sur le raccord (10 ; 51), **caractérisé en ce que** le point de raccordement fluidique (27) est conçu comme un raccord à vis fluidique pour visser dans un vérin hydraulique fluidique et **en ce qu'**un système de capteurs (30) fixé sur une extrémité du câble (29) éloignée du raccord est relié via le câble de raccordement (29) de manière électrique et/ou optique aux moyens de raccord (22 ; 54), le système de capteurs (30) étant conçu comme un capteur de position de piston et/ou un capteur de pression pour le vérin hydraulique.

2. Raccord selon la revendication 1, **caractérisé en ce qu'**au moins une pointe de contact électrique est disposée comme moyen de raccord (22) sur un fond de logement d'emboîtement (15) de manière non symétrique en rotation sur la coupe transversale d'une conduite en plastique (11) à emboîter de telle manière qu'elle s'aligne lors de l'enfoncement d'une telle conduite en plastique (11) dans le logement d'emboîtement (15) avec sa au moins une branche de ligne électrique (12 - 14) et pénètre dans celle-ci.

3. Raccord selon la revendication 1 ou 2, **caractérisé en ce qu'**au moins un émetteur optique (54) ou un convertisseur optique est disposé comme moyen de raccord sur un fond de logement d'emboîtement (15) adapté de manière non symétrique en rotation sur la coupe transversale d'une conduite en plastique (52) à emboîter de telle manière qu'il s'aligne lors de l'enfoncement d'une telle conduite en plastique (52) dans le logement d'emboîtement (15) et fabrique une connexion optique.

4. Raccord selon une des revendications précédentes, **caractérisé en ce que** le logement d'emboîtement (15) possède ou se compose essentiellement d'un élément tubulaire (20) orienté dans la direction d'emboîtement (S), et pénétrant lors de l'enfoncement d'une telle conduite en plastique (11 ; 52) dans le canal fluidique (21).

5. Raccord selon l'une des revendications précédentes, **caractérisé en ce qu'**une fixation de serrage maintenant une conduite en plastique encastrée (11 ; 52) dans le logement d'emboîtement (15) est prévue qui est conçue en particulier comme un raccord à vis de serrage.

6. Raccord selon la revendication 5, **caractérisé en ce qu'**un secteur de paroi (18) enveloppant le logement d'emboîtement (15) en forme d'anneau avec un filetage (17) et un élément de vissage (24) correspondant, en particulier un écrou-raccord, sont prévus, sachant qu'un élément de clavette (25) pouvant être déplacé par l'élément de vissage (24) de manière axiale le long d'une surface conique ou oblique est prévu pour une fixation par serrage d'une conduite en plastique (11 ; 52), en particulier pour une fixation par serrage entre l'élément tubulaire (20) et l'élément de clavette (25).

7. Raccord selon la revendication 6, **caractérisé en ce que** l'élément de clavette flexible (25) est conçu comme un anneau de serrage et possède un contour intérieur correspondant au contour extérieur d'une conduite (11 ; 52), sachant que le diamètre extérieur se rétrécit sous forme de cône ou de clavette vers le fond du logement d'emboîtement (15).

8. Raccord selon l'une des revendications précédentes, **caractérisé en ce que** le système de capteurs (30) et le câble de raccordement (29) électrique et/ou optique sont reliés ensemble de manière irréversible, et sont en particulier formés l'un sur l'autre.

9. Raccord selon l'une des revendications précédentes, **caractérisé en ce que** le au moins un câble de raccordement (29) est formé de manière irréversible sur le corps de base (10 ; 51).

10. Raccord selon l'une des revendications précédentes, **caractérisé en ce que** le système de capteurs (30) possède un moyen de fixation variable à un vérin hydraulique, qui possède encore au moins une ouverture de vissage de raccordement destinée à visser le raccord (10 ; 51).
